# EUROPÄISCHE PATENTSCHRIFT

(11) **EP 2 711 513 B1**
(45) Veröffentlichungstag und Bekanntmachung des Hinweises auf die Patenterteilung: **20.03.2019**
(21) Anmeldenummer: 13002150.4
(22) Anmeldetag: 24.04.2013
(51) Int. Cl.: F01N 3/00, F01N 11/00, F01N 13/16, G01K 7/36, G01K 11/12, G01N 27/00, G01N 27/82, G01R 33/00

(54) **Abgasnachbehandlungssystem für Brennkraftmaschinen**
Waste gas treatment system for combustion engines
Système de traitement des gaz d'échappement pour des moteurs à combustion interne

(30) Priorität: 04.07.2012 DE 102012013221
(43) Veröffentlichungstag der Anmeldung: 26.03.2014
(60) Teilanmeldung: 15002449.5
(73) Patentinhaber: MAN Truck & Bus AG, 80995 München (DE)
(72) Erfinder: Döring, Andreas, 82008 München (DE); Rothe, Dieter, 90403 Nürnberg (DE)
(74) Vertreter: Liebl, Thomas

(56) Entgegenhaltungen:
- DE-A1-102009 027 862
- DE-B3-102005 047 739
- FR-A1- 2 966 198
- US-A- 5 975 758
- US-A1- 2009 097 528
- US-B1- 6 974 249
- US-B1- 8 177 423

## Beschreibung

Die Erfindung betrifft ein Abgasnachbehandlungssystem mit einem Katalysator und/oder mit einer anderen Abgasnachbehandlungseinheit für den Einsatz im Abgasstrom von Brennkraftmaschinen.

Zur Reduzierung der Emissionen von Brennkraftmaschinen, insbesondere von Verbrennungsmotoren in Kraftfahrzeugen, werden Abgasnachbehandlungssysteme eingesetzt, die Partikelfilter und/oder Katalysatoren als Abgasnachbehandlungseinheiten verwenden. Diese Abgasnachbehandlungseinheiten haben einen temperaturabhängigen Wirkungsgrad und können bei zu hohen Betriebstemperaturen auch irreversibel beschädigt oder auch vollständig unbrauchbar werden.

Bei einem Partikelfilter kann beispielsweise eine Rußoxidation optimal bei ca. 370° C ablaufen. Liegen dagegen die Betriebstemperaturen unterhalb von 230° C kann keine sichere Funktion des Partikelfilters sichergestellt werden. Dies kann bei schwach belasteten und in Fahrzeugen verbauten Motoren, beispielsweise bei Personenkraftwagen, Linienbussen oder Müllfahrzeugen, die noch zusätzliche hohe Leerlaufanteile aufweisen, auftreten. Durch die Zugabe von Kohlenwasserstoffen kann hier eine gezielte Temperaturerhöhung vorgenommen werden, um in einen optimalen Betriebstemperaturbereich zu gelangen.

Grundsätzlich besteht beim Betrieb der Abgasnachbehandlungseinheiten die Gefahr, dass beispielsweise durch exothermes Abbrennen des kohlenstoffhaltigen Rußes ein Temperaturanstieg bis auf 1000° C und damit eine Schädigung der Abgasnachbehandlungseinheit beziehungsweise nachgeschalteter Katalysatoren kommen kann. Auch der Einsatz von V₂O₅ als Aktivmaterial für einen SCR-Katalysator kann Probleme aufwerfen, wenn die Abgastemperatur am SCR-Katalysator über 650° C liegt, da V₂O₅ dann sublimiert. Bei derartigen Partikelfiltern mit V₂O₅ als Aktivmaterial können unkontrollierte Temperaturspitzen auftreten und den Partikelfilter schädigen.

Prinzipiell kann festgehalten werden, dass, insbesondere bei einer katalytischen Beschichtung des Partikelfilters darauf geachtet werden muss, dass bestimmte maximale Temperaturen nicht überschritten werden.

Neben Kohlenstoff sammelt sich auch Asche an, die bei der Verbrennung von Motoröl und/oder Kraftstoff, hier speziell sogenannter Biokraftstoffe, im Partikelfilter anfällt. Daher muss dieser turnusmäßig aus dem Fahrzeug ausgebaut und gereinigt werden. Dies läuft üblicherweise so ab, dass nach dem Ausbau der Filter in einem Ofen ausgebrannt wird, um eventuell noch enthaltenen Russ zu entfernen. Anschließend wird die Asche mir Hilfe von Druckluft ausgeblasen oder mit Hilfe von Wasser ausgewaschen.

Da die Reinigung sehr zeitintensiv ist und erhebliche Investitionen in die Reinigungseinrichtungen voraussetzt, werden die Filter oft nicht sofort gereinigt, sondern gegen einen zweiten Filter getauscht. Die ausgebauten Filter werden meist zentral gesammelt, gereinigt und als Tauschfilter dem Kreislauf wieder zur Verfügung gestellt.

Allerdings besteht dabei das Problem, dass bevor der Filter wieder in den Kreislauf eingeschleust werden kann, eine aufwändige Analyse des Filters, speziell auf zu hohe Betriebstemperaturen, die zu einer Beschädigung des Filters und/oder darauf aufgebrachter katalytischer Beschichtungen geführt haben können, erfolgen muss. Um Risse innerhalb des Filters, die durch zu hohe Temperaturspannungen entstanden sind, erkennen zu können, wird zum Beispiel Röntgen oder Computertomographie angewendet. Um zu überprüfen, ob die katalytische Beschichtung beschädigt ist, sind aufwändige Messungen, insbesondere Aktivitätsmessungen mit Hilfe von Modellgasanlagen, notwendig.

Aus der EP 1 560 009A1 ist ein Temperaturindikator für die Anwendung im Lebensmittelbereich bekannt, der insbesondere zur Überwachung der "Kühlkette" dient.

Die weitere US 2009/0097528 A1 offenbart ein temperaturempfindliches Element, das wenigstens teilweise aus einem temperaturempfindlichen Material besteht und das an einem hinsichtlich auftretender Temperaturen zu überwachenden Bereich einer Abgasnachbehandlungseinheit eines Abgasnachbehandlungssystems angeordnet ist. Das temperaturempfindliche Material ist dabei derart ausgebildet, dass es ab einer vorgegebenen Grenztemperatur schmilzt.

Aus der US 5 975 758 A ist ein Verfahren zur Erfassung einer kumulativen Temperaturhistorie eines Prüfkörpers, beispielsweise eines Katalysators, über 400 °C bekannt, bei dem ein Temperaturhistorie-Sensor vorgesehen ist, der wenigstens ein Elektroden-Paar und eine zwischen zwei Elektroden des Elektroden-Pars angeordnete Diffusionsschicht aufweist. In der Diffusionsschicht sind leitfähige Metall-Partikel angeordnet, die ab einer bestimmten Temperatur, beispielsweise 400 °C in die Diffusionsschicht eindiffundieren und so die elektrische Leitfähigkeit der Diffusionsschicht beeinflussen.

Die weitere US 8 177 423 B1 betrifft eine Sensorik, bei der eine Vielzahl von separaten Sensorelementen in der Umgebung eines Gegenstands angeordnet ist. Jedes dieser Sensorelemente weist ein unterschiedliches unbeständiges Material auf, welches sich bei einer Temperaturbelastung fortwährend ändert.

Aus der DE 10 2005 047 739 B3 ist ein Substrat mit einer aufgebrachten Beschichtung bekannt, bei dem die Beschichtung eine Beschichtungsmatrix enthält, in deren Matrixstruktur Multilayer-Nanopartikel und/oder verkapselte Nanopartikel angeordnet sind. Dabei wird von diesen Partikeln bei erstmaligem Überschreiten einer Grenztemperatur ein Farbstoff freigesetzt und/oder eine Farbreaktion ausgelöst, welche eine irreversible Farbänderung der Beschichtung hervorruft.

Es ist Aufgabe der Erfindung, ein Abgasnachbehandlungssystem anzugeben, das eine einfache Möglichkeit bietet, Beschädigungen durch aufgetretene zu hohe Betriebstemperaturen an einem Partikelfilter oder Katalysator erkennen zu können.

Gelöst wird die Aufgabe durch ein Abgasnachbehandlungssystem mit den Merkmalen des Patentanspruches 1.

Gemäß Patentanspruch 1 wird ein Abgasnachbehandlungssystem mit einem Katalysator und/oder mit einer anderen Abgasnachbehandlungseinheit für den Einsatz im Abgasstrom von Brennkraftmaschinen vorgeschlagen, wobei wenigstens ein temperaturempfindliches Element, welches wenigstens teilweise aus temperaturempfindlichem Material besteht, an wenigstens einem hinsichtlich auftretender Temperaturen zu überwachenden Bereich der Abgasnachbehandlungseinheit angebracht ist, und wobei das temperaturempfindliche Material bei wenigstens einer vorgegebenen Grenztemperatur seine Eigenschaft dauerhaft sichtbar ändert. Erfindungsgemäß verdampft das temperaturempfindliche Material ab der vorgegebenen Grenztemperatur. Wesentlich ist dabei, dass die detektierbaren Änderungen am temperaturempfindlichen Material dauerhaft sind, damit zu einem beliebigen späteren Zeitpunkt geprüft werden kann, ob eine oder gegebenenfalls auch mehrere vorgegebene Temperaturgrenzen überschritten wurden. Weiter erfindungsgemäß ist das verdampfende temperaturempfindliche Material in Form von Vanadiumoxid und ein mit diesem reagierendes Material, nämlich Bismut(III)-oxid eines Indikators so ausgewählt und aufeinander abgestimmt sind, dass sich bei einem Auftreffen und Reagieren des verdampften Materials mit dem Material des Indikators am Indikator eine gegenüber dem Indikator-Ausgangszustand deutlich andere Farbgebung einstellt.

In besonderem Maße hat sich allerdings die Anbringung von temperaturempfindlichem Material zur Überwachung der Temperatur auf den Stirnseiten, also der An- und/oder Abströmfläche, der Komponenten zur Abgasnachbehandlung, also den Katalysatoren und/oder Partikelfiltern, bewährt. Da Wärmeübergänge auf andere Teile an dieser Position zu vernachlässigen sind, gelingt eine besonders genaue Bestimmung der Substrattemperatur beziehungsweise Katalysatortemperatur.

Die Erfindung wird nachfolgend anhand von in der Zeichnung dargestellten Ausführungsbeispielen näher erläutert.

Es zeigen:
- Fig. 1: einen Wabenkörper eines Katalysators mit auf dem Substrat aufgebrachtem temperaturempfindlichen Elementen,
- Fig. 2: einen aus temperaturempfindlichem Material dargestellten Barcode, und
- Fig. 3: eine vereinfachte Seitenansicht eines in einen Abgasstrom einer Brennkraftmaschine eingesetzten Katalysators.

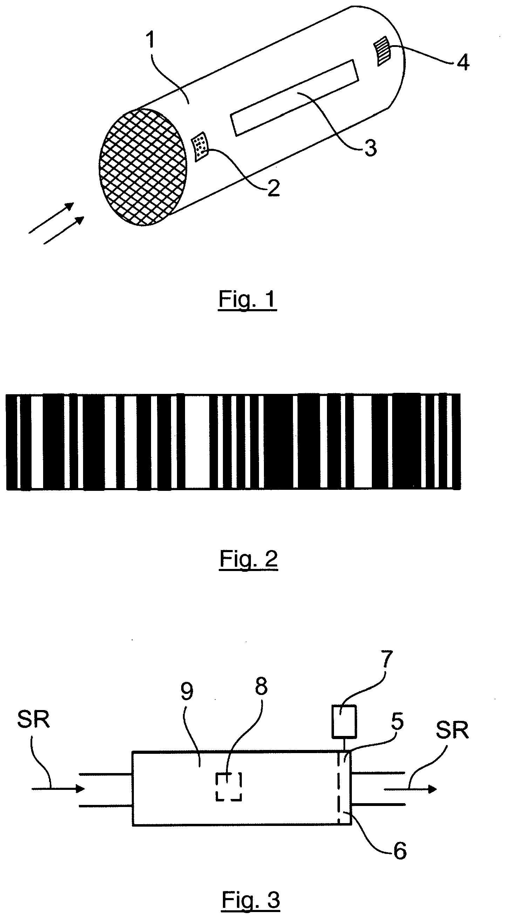

Der in Figur 1 dargestellte Wabenkörper 1 eines Katalysators wird in Pfeilrichtung von dem zu reinigenden Abgas durchströmt, wobei aufgrund ablaufender chemischer Reaktionen hohe Betriebstemperaturen im Wabenkörper 1 auftreten können. Das Grundmaterial des Wabenkörpers 1 besteht aus Keramik und kann auch als Substrat 11 bezeichnet werden, an dessen Umfangsfläche an drei Bereichen temperaturempfindliche Elemente 2, 3, 4 aus unterschiedlichen temperaturempfindlichen Materialien beispielhaft aufgebracht sind. Im mittleren Bereich ist das temperaturempfindliche Element 3 als langgestreckter Streifen auf den Wabenkörper 1 aufgebracht, wodurch eine Temperaturüberwachung über einen größeren Bereich möglich ist. Dieser besteht aus einer ab einer bestimmten Temperatur verdampfenden Substanz. Im Eingangsbereich ist ein nicht erfindungsgemäßes, als 2D-Code aufgebrachtes temperaturempfindliches Element 2 aufgebracht, während im Endbereich ein ebenfalls nicht erfindungsgemäßes temperaturempfindliches Element 4 einen Barcode darstellt.

Die aufgebrachten temperaturempfindlichen Elemente 2, 3, 4 können für unterschiedliche Grenztemperaturen ihre Materialeigenschaft ändern, das heißt dass auftretende Materialänderungen auf die Überschreitung unterschiedlicher Grenztemperaturen hinweisen.

In der nicht erfindungsgemäßen Figur 2 ist ein Barcode beispielhaft dargestellt, dessen helle und dunkle Linien von unterschiedlichen temperaturempfindlichen Materialien gebildet werden können und können auch über einen längeren Bereich, beispielsweise über nahezu die gesamte Länge eines Wabengrundkörpers eines Katalysators, angebracht sein. Damit kann dann über die gesamte, mit temperaturempfindlichem Material versehene Fläche eine Temperaturüberwachung durch ein Auslesen der Barcodeinformation sehr einfach erfolgen.

In Figur 3 ist die Seitenansicht eines Katalysators 9 dargestellt, der vom Abgasstrom entsprechend der angegebenen Strömungsrichtung SR durchströmt wird. Am Ausgang 5 des Katalysators 9 ist ein mit unterbrochener Linie abgegrenzter Abschnitt als Indikator 6 ausgebildet, an dem beispielsweise eine auftretende Farbveränderung von einem Detektor 7 festgestellt werden kann. Am Indikator 6 kann eine Farbveränderung beispielsweise dadurch auftreten, dass ein im Katalysator 9 eingebrachtes temperaturempfindliches Element 8 bei Überschreiten einer Grenztemperatur verdampft ist und am Indikator 6 durch eine chemische Reaktion eine Farbveränderung hervorgerufen hat.

Als verdampfende Komponente wird Vanadiumoxid verwendet. Ab 650°C verdampft dieses und gelangt auf den Indikator 6. Um eine kräftige Farbe zu erhalten, bieten sich Bismutverbindungen, wie zum Beispiel Bismut(III)-oxid an, das nach folgender Gleichung mit V₂O₅ ein kräftiges, gelbes Farbpigment ausbildet:

Bi₂O₃ + V₂O₅ --> 2 BiVO₄

## Patentansprüche

1. Abgasnachbehandlungssystem mit einer Abgasnachbehandlungseinheit (9) für den Einsatz im Abgasstrom von Brennkraftmaschinen, wobei wenigstens ein temperaturempfindliches Element (3, 8), welches wenigstens teilweise aus temperaturempfindlichem Material besteht, an wenigstens einem hinsichtlich auftretender Temperaturen zu überwachenden Bereich der Abgasnachbehandlungseinheit vorgesehen ist, und wobei das temperaturempfindliche Material bei einer vorgegebenen Grenztemperatur seine Eigenschaft dauerhaft sichtbar ändert, **dadurch gekennzeichnet,**
**dass** das temperaturempfindliche Material ab der vorgegebenen Grenztemperatur verdampft, und
**dass** das verdampfende temperaturempfindliche Material in Form von Vanadiumoxid und ein mit diesem reagierendes Material, nämlich Bismut(III)-oxid eines Indikators (6) so ausgewählt und aufeinander abgestimmt sind, dass sich bei einem Auftreffen und Reagieren des verdampften Materials mit dem Material des Indikators (6) am Indikator (6) eine gegenüber dem Indikator-Ausgangszustand deutlich andere Farbgebung einstellt.

## Claims

1. Exhaust-gas aftertreatment system having an exhaust-gas aftertreatment unit (9) for use in the exhaust-gas flow of internal combustion engines, wherein at least one temperature-sensitive element (3, 8) which is composed at least partially of temperature-sensitive material is provided at at least one region of the exhaust-gas aftertreatment unit which is to be monitored with regard to prevailing temperatures, and wherein the temperature-sensitive material undergoes a permanent visible change in its characteristic at a predefined limit temperature, **characterized**
**in that** the temperature-sensitive material evaporates starting at the predefined limit temperature, and
**in that** the evaporating temperature-sensitive material in the form of vanadium oxide, and a material, which reacts therewith, of an indicator (6), specifically bismuth(III) oxide, are selected and coordinated with one another such that, in the event of the evaporated material impinging on and reacting with the material of the indicator (6), a colouring occurs on the indicator (6) which is distinctly different in relation to the indicator initial state.

## Revendications

1. Système de post-traitement des gaz d'échappement comprenant une unité de post-traitement de gaz d'échappement (9) pour l'utilisation dans un flux de gaz d'échappement de moteurs à combustion interne, au moins un élément sensible à la température (3, 8), qui se compose au moins en partie de matériau sensible à la température, étant prévu au niveau d'au moins une région de l'unité de post-traitement de gaz d'échappement devant être surveillée en termes des températures à cet endroit, et le matériau sensible à la température modifiant sa propriété de manière visible en permanence pour une température limite prédéfinie **caractérisé**
**en ce que** le matériau sensible à la température s'évapore à partir de la température limite prédéfinie et
le matériau sensible à la température s'évaporant sous forme d'oxyde de vanadium, et un matériau réagissant avec celui-ci, à savoir de l'oxyde de bismuth (III) d'un indicateur (6), sont sélectionnés et adaptés l'un à l'autre de telle sorte qu'en cas de mise en contact et de réaction du matériau évaporé avec le matériau de l'indicateur (6), il s'établisse au niveau de l'indicateur (6) une coloration nettement différente de celle de l'état initial de l'indicateur.
